# EUROPÄISCHE PATENTSCHRIFT

(11) **EP 1 932 419 B1**
(45) Veröffentlichungstag und Bekanntmachung des Hinweises auf die Patenterteilung: **03.03.2010**
(21) Anmeldenummer: 07121600.6
(22) Anmeldetag: 27.11.2007
(51) Int. Cl.: A01D 89/00, A01F 15/10

(54) **Landwirtschaftliche Presse**
Agricultural compactor
Presse agricole

(30) Priorität: 15.12.2006 DE 102006059265
(43) Veröffentlichungstag der Anmeldung: 18.06.2008
(73) Patentinhaber: Deere & Company, Moline, IL 61265-8098 (US)
(72) Erfinder: Viaud, Jean, 70100, Gray (FR)
(74) Vertreter: Magin, Ludwig Bernhard

(56) Entgegenhaltungen:
- EP-A- 1 252 813
- GB-A- 2 117 619
- US-A- 4 516 389
- US-B1- 6 295 797

## Beschreibung

Die Erfindung betrifft eine landwirtschaftliche Presse mit einem Gutaufnehmer und einer über diesem vorgesehenen und diesem gegenüber innerhalb eines ersten Bereichs verstellbaren Gutniederhaltevorrichtung zur Steuerung der zugeführten Gutmenge, die zumindest bereichsweise zur Behebung eines Gutstaus zwischen dem Gutaufnehmer und der Gutniederhaltervorrichtung für eine Bewegung über den ersten Bereich hinaus von dem Gutaufnehmer weg freigebbar ist.

US 6 295 797 offenbart eine Rundballenpresse mit zwei Gutniederhaltem mit federnden Zinken, von denen ein stromabwärts gelegener über Gasdruckspeicher gegen schnelle Bewegungen gehalten wird. Beide Gutniederhalter können sich unter dem Druck des Guts bewegen bis sie sich nicht mehr weiter bewegen können. Wenn dieser Zustand eingetreten ist, wird es bei weiterer Gutzufuhr zu einem Gutstau kommen. Dieses Verhalten stellt sich bei allen vergleichbaren Gutniederhaltern gleich dar.

Die US 4 516 389 offenbart eine Rundballenpresse mit einem Gutaufnehmer und einer darüber angeordneten Gutniederhaltevorrichtung, die um eine horizontale Achse gegenüber dem Gutaufnehmer zwischen zwei Anschlägen an einem Arm schwenkbar ist. Der Arm kann angehoben werden, um die Anschläge aus dem Stellweg der Gutniederhaltevorrichtung zu entfernen, so dass er sich soweit von dem Gutaufnehmer entfernt, dass ein Gutstau behebbar ist. Diese Vorrichtung ist insofern nachteilig, als die Bewegung nach der Freigabe in beiden Richtungen nicht mehr kontrollierbar ist.

Das der Erfindung zugrunde liegende Problem wird darin gesehen, dass im Falle einer Beseitigung eines Gutstaus die Maschine eine kontrollierte Bewegung der Gutniederhaltevorrichtung nicht gewährleistet ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird zwar weiterhin für eine regelmäßige Gutzufuhr gesorgt; zusätzlich kann im Falle eines doch aufgetretenen Gutstaus Abhilfe geschaffen werden. Die Bewegung in den zusätzlichen Bereich kann aber nicht von sich aus erfolgen, was nämlich eine Vergrößerung des Staus bewirken könnte, sondern es bedarf einer gewollten Freigabe, die motorisch, ferngesteuert, etc. erfolgen kann. Diese bewusste Entscheidung zur Freigabe kann dann auch mit anderen Vorgängen verknüpft werden, z.B. dem Abschalten des Antriebs, der Bedienung von Sicherheits- und/oder Signalvorrichtungen, etc. Inwiefern, wo und wie die Gutniederhaltevorrichtung verstellt wird, kann den Gegebenheiten angepasst werden, wobei nur wichtig ist, dass das eingeklemmte Gut befreit werden kann. Der Gutaufnehmer wie auch die Presse können vielfältig ausgeführt werden, z.B. als Rund-, Rechteck- oder Großballenpressen, als Zinken-, Band- oder sonstige Pick-up. Der erste Bereich kann z. B. durch ein Langloch an einem Elektro- oder Hydraulikmotor erzielt werden, der und damit die Lage des Langlochs durch seinen Hub verstellbar ist.

Während eine Gutniederhaltevorrichtung insgesamt verstellbar ausgebildet sein kann, reicht es aus, wenn ein Teil von ihr, z.B. eine Gutleitvorrichtung, verstellbar ist. Ein vielteiliger Aufbau kann leicht erreicht werden, wenn ein Träger vorgesehen ist, der aus einzelnen Armen, Querstreben, einem Rahmen oder dergleichen bestehen kann. Die Einspeisung des Guts in den Bereich zwischen dem Gutaufnehmer und der Gutleitvorrichtung wird erleichtert, wenn eine Niederdrückvorrichtung vorgesehen ist, auf die zuerst das aufgenommene Gut auftrifft, und die es auf den Gutaufnehmer drückt. An dem Träger sind die erforderlichen Lager vorgesehen, die die Stellbewegungen ermöglichen.

Unterschiedlich dicke Schwade können leicht innerhalb des normalen Pressbetriebs befördert werden, wenn der Träger im ersten Bereich schwimmend gelagert ist. Für die Bewegung über den zusätzlichen Bereich kann entweder der Träger oder die Gutleitvorrichtung angehoben werden. Die Schwimmbewegung erfolgt vorzugsweise zumindest gegen den Widerstand des Gewichts der Gutniederhaltevorrichtung oder einer Feder, wobei eventuell sogar Stoß- oder Schwingungsdämpfer verwendet werden können, die unkontrollierte Bewegungen vermeiden.

Eine Gutleitvorrichtung, die z.B. als ein Blech, ein Rechen oder als eine Mehrzahl von Rollen ausgebildet ist, ist in der Lage, eine bestimmte Distanz zu überbrücken und somit ein unkontrolliertes Ansammeln von Gut zu vermeiden. Die Bauart kann je nach der Gutart gewählt werden, wobei insbesondere Rollen für einen geringen Bewegungswiderstand sorgen.

Insbesondere bei hohen Aufnahmegeschwindigkeiten ist es hilfreich, Reibung durch eine sich drehende Niederdrückvorrichtung gering zu halten, da sich ansonsten das Gut vor der Niederdrückvorrichtung aufstaut. Eine solche Niederdrückvorrichtung kann sogar drehend angetrieben werden und/oder axial fördernde Schneckenabschnitte aufweisen.

Die Bewegung der Gutniederhaltevorrichtung bzw. der Gutleitvorrichtung innerhalb des ersten, d.h. des normalen Arbeitsbereichs, kann auf kostengünstige Weise, z.B. mittels einer Kette, eines Seils, eines Langlochs, eines Lenkers, oder mittels Stegen begrenzt werden, die jeweils Anschläge für mindestens ein Ende eines Bewegungsbereichs bilden.

In der Zeichnung sind mehrere nachfolgend näher beschriebene Ausführungsbeispiele dargestellt, wobei Figuren 1-3 und 5, 6 keine Ausführungsbeispiele der Erfindung darstellen. Es zeigt:
- Fig. 1: eine landwirtschaftliche Presse hinter einem Zugfahrzeug mit einer Gutniederhaltevorrichtung nach einem ersten Ausführungsbeispiel;
- Fig. 2: die Gutniederhaltevorrichtung nach Fig. 1 in vergrößerter Darstellung und in einer unteren Arbeitsstellung;
- Fig. 3: die Gutniederhaltevorrichtung nach Fig. 1 in vergrößerter Darstellung und in einer oberen Stellung, in der ein Gutstau beseitigt werden kann;
- Fig. 4: eine Gutniederhaltevorrichtung nach einem zweiten Ausführungsbeispiel in einer oberen Stellung, in der ein Gutstau beseitigt werden kann;
- Fig. 5: eine Gutniederhaltevorrichtung nach einem dritten Ausführungsbeispiel in einer unteren Arbeitsstellung;
- Fig. 6: die Gutniederhaltevorrichtung nach Figur 5 in einer oberen Stellung, in der ein Gutstau beseitigt werden kann;
- Fig. 7: eine Gutniederhaltevorrichtung nach einem vierten Ausführungsbeispiel in einer unteren Arbeitsstellung;
- Fig. 8: die Gutniederhaltevorrichtung nach Figur 7 in einer oberen Stellung;
- Fig. 9: die Gutniederhaltevorrichtung nach Figur 7 in einer oberen Stellung, in der ein Gutstau beseitigt werden kann, und
- Fig. 10: eine Gutniederhaltevorrichtung nach einem fünften Ausführungsbeispiel.

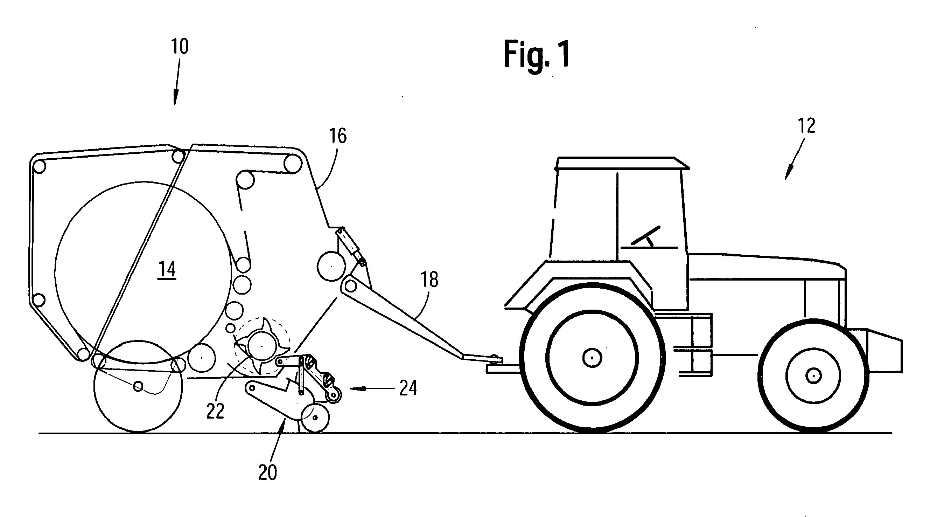

Figur 1 zeigt eine landwirtschaftliche Presse 10 hinter einem Zugfahrzeug 12, wie sie im Allgemeinen bekannt sind.

Die landwirtschaftliche Presse 10 ist als eine Rundballenpresse mit veränderlicher Presskammer 14 ausgebildet; es könnte aber auch eine andere Presse, ein Feldhäcksler, ein Ladewagen oder dergleichen sein, bei denen vergleichbare Probleme auftreten.

Die landwirtschaftliche Presse 10 weist einen Rahmen 16, eine Deichsel 18, einen Gutaufnehmer 20, einen Zufuhrrotor 22 und eine Gutniederhaltevorrichtung 24 auf.

Wie dies bekannt ist, nimmt die landwirtschaftliche Presse 10 mittels des Gutaufnehmers 20 Gut vom Boden auf, das dort in Schwaden abgelegt ist und z.B. aus Heu, Stroh oder Silage bestehen kann. Es gibt auch industrielle Anwendungen, bei denen Abfall, Stoffe, Tabak etc. gepresst werden. Während dieser Gutaufnahme kann es zu Problemen kommen, wenn das Schwad ungleichmäßig dick ist.

Die Presskammer 14 ist mit einem Einlass 26 im vorderen unteren Bereich versehen, durch den das aufgenommene Gut von dem Gutaufnehmer 20 direkt oder - sofern vorhanden - von dem Zufuhrrotor 22 eingespeist wird. Die Presskammer 14 kann auch in ihrer Größe konstant ausgebildet sein.

Der Rahmen 16 stützt sich über Räder auf dem Boden ab, trägt alle Teile der landwirtschaftlichen Presse 10 und ist über die Deichsel 18 an das Zugfahrzeug 12 angeschlossen.

Der Gutaufnehmer 20 ist normalerweise als eine sogenannte Pick-up mit rotierenden Zinken ausgebildet, die allerdings beliebig ausgebildet sein kann. Jedenfalls hebt der Gutaufnehmer 20 das auf dem Boden liegende Gut an und fördert es überkopf zu dem Einlass 26. Der Gutaufnehmer 20 stützt sich mittels Rädern auf dem Boden ab und kann somit dessen Kontur folgen; in diesem Ausführungsbeispiel kann der Gutaufnehmer 20 auch gegenüber dem Rahmen 16 vertikal verstellt werden.

Der Zufuhrrotor 22 kann als einfacher rein tangential fördernder Rotor, als einer mit zusätzlichen Axialschnecken und/oder als Teil einer Schneidvorrichtung ausgebildet sein, wie dies jeweils für sich bekannt ist. Außerdem kann der Zufuhrrotor 22 unterschlächtig fördernd arbeiten - wie in dem Ausführungsbeispiel - oder oberschlächtig, wobei seine normale Drehrichtung im Fall eines Gutstaus umgekehrt werden kann. Der Zufuhrrotor 22 nimmt das aufgenommene Gut direkt von dem Gutaufnehmer 20 an und speist es durch den Einlass 26 in die Presskammer 14.

Die Gutniederhaltevorrichtung 24 befindet sich oberhalb des Gutaufnehmers 20 und - falls vorhanden - vor dem Zufuhrrotor 22; seine Aufgabe ist es, für einen gleichmäßigen Gutfluss in die Presskammer 14 zu sorgen und bei dieser Erfindung eine Möglichkeit zu schaffen, auf eventuell doch eingetretene Gutstaus zu reagieren.

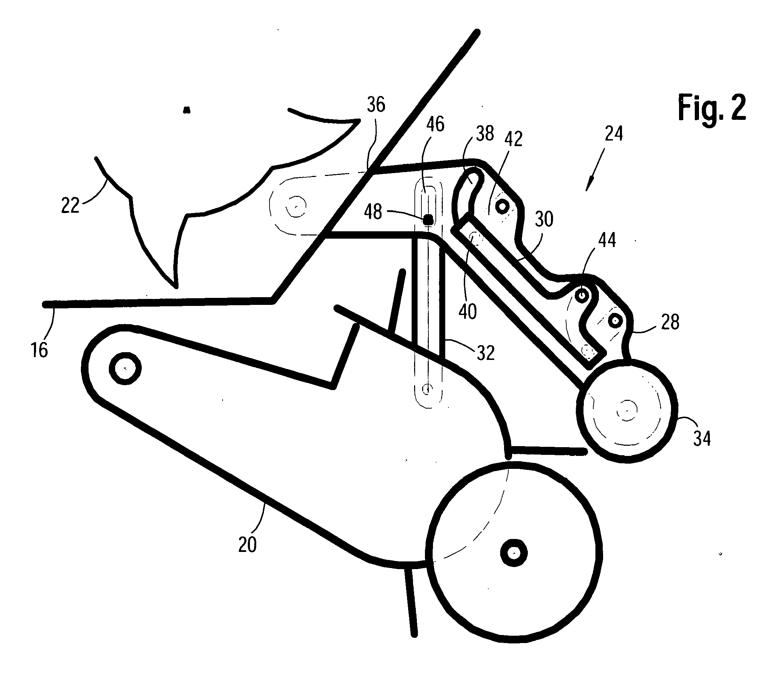

Zu diesem Zweck weist die Gutniederhaltevorrichtung 24 - sh. insbesondere Figur 2 - einen Träger 28, eine Gutleitvorrichtung 30 und einen Wegbegrenzer 32 auf, denen in diesem Fall nicht zwingend eine stromaufwärts gelegene Niederdrückvorrichtung 34 zugeordnet ist.

Der Träger 28 enthält zwei gleiche, nach vorne, unten abgewinkelte Arme 36, jeweils einer auf jeder Seite, die im rückwärtigen Bereich vertikal schwenkbar an dem Rahmen 16 angebracht sind und zwischen denen sich die Gutleitvorrichtung 30 und die Niederdrückvorrichtung 34 erstrecken. Die Arme 36 können auch untereinander auf nicht gezeigte Weise mittels Streben oder dergleichen verbunden werden und somit eine in sich steife vertikal schwenkbare Einheit bilden.

Die Gutleitvorrichtung 30 ist in diesem Fall als eine einfache, glatte Platte ausgebildet, die einen wesentlichen Teil des Abstandes zwischen der Niederdrückvorrichtung 34 und dem Zufuhrrotor 22 überdeckt. Wie dies mit Blick auf die weiteren Figuren noch beschrieben wird, kann sich die Gutleitvorrichtung 30 mit oder ohne den Träger 28 gegenüber dem Gutaufnehmer 20 bewegen und sich somit der Dicke des Schwads anpassen; sie kann aber auch über diesen normalen Schwenkweg hinaus verstellt werden, um das Beseitigen eines Gutstaus zu ermöglichen. Anstatt als eine Platte kann die Gutleitvorrichtung 30 auch als ein Band, eine Vielzahl von Rollen, als Zinken oder dergleichen ausgebildet werden. Bei dem in Figur 2 gezeigten Ausführungsbeispiel ist die Gutleitvorrichtung 30 über zwei parallele, pendelnde Laschen 42 auf jeder Seite vertikal bewegbar an die Arme 36 angeschlossen. Zur Steuerung der Bewegung der Gutleitvorrichtung 30 sind in den Armen 36 Schlitze 38 und an der Gutleitvorrichtung 30 Führungen vorgesehen, die in den viertelkreisbogenförmigen Schlitzen 38 bewegt bzw. angehalten werden können. Die Gutleitvorrichtung 30 ist zudem mit einer Riegelvorrichtung 44 versehen, die aus zwei in Deckung bringbaren Öffnungen an ihr und den Armen 36 und einem durch sie steckbaren Bolzen bestehen kann. Der Weg, den die Gutleitvorrichtung 30 nach der Entriegelung zurücklegen kann, entspricht mithin einem zweiten Bereich 66, der der Entspannung von eventuell eingeklemmtem Gut dient, um es entnehmen zu können.

Der Wegbegrenzer 32 ist in dem Ausführungsbeispiel als eine Strebe ausbildet, die in ihrem unteren Endbereich vertikal schwenkbar an dem Gutaufnehmer 20 angeschlossen ist und in ihrem oberen oder gegenüber liegenden Endbereich einen Längsschlitz 46 aufweist. Der Längsschlitz 46 wird von einem Bolzen 48 durchdrungen, der sich an wenigstens einem der Arme 36 befindet. Der Längsschlitz 46 definiert somit den minimalen wie den maximalen Abstand der Gutniederhaltevorrichtung 24 gegenüber dem Gutaufnehmer 20 und somit einen ersten Bereich 64 oder normalen Arbeitsbereich.

Die Niederdrückvorrichtung 34 ist in diesem Fall als ein Rollenniederhalter ausgebildet, ist für die Erfindung aber nicht zwingend; er könnte auch als Blech oder dergleichen ausgebildet sein und hilft, das Gut störungsfrei in den Spalt zwischen dem Gutaufnehmer 20 und der Gutniederhaltevorrichtung 24 einzuführen. In dem Fall der Ausbildung als Rollenniederhalter, könnte die Niederdrückvorrichtung 34 auch angetrieben werden und/oder mit Axialleitelementen ausgestattet sein.

Nach alledem ergibt sich für das Ausführungsbeispiel nach den Figuren 1 bis 3 folgende Funktion.

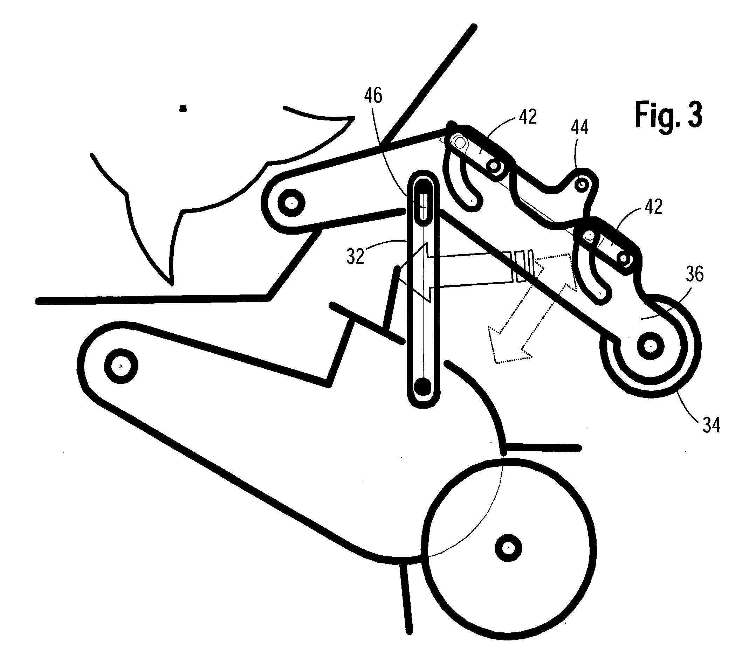

Das vom Boden aufgenommene Gut wird in den Bereich zwischen der Gutniederhaltevorrichtung 24 und dem Gutaufnehmer 20 gefördert, wobei es eine unterschiedlich dicke Matte bildet. Solange sich die Dicke der Matte in dem Bereich befindet, innerhalb dessen sich die Gutniederhaltevorrichtung 24 aufgrund der Länge des Längsschlitzes 46 bewegen kann, wird das Gut kontinuierlich in den Einlass 26 gefördert. Sollte ein Fall eintreten, in dem entweder abrupt zuviel Gut aufgenommen wurde oder beim Reversieren das zurück beförderte Gut nicht abfließen kann, ist es möglich, dass sich das Gut in dem Bereich unterhalb der Gutniederhaltevorrichtung festklemmt und nicht mehr befördert werden kann - weder maschinell noch manuell. In diesem Fall wird eine Bedienungsperson den von dem Zugfahrzeug 12 kommenden Antrieb abschalten, sich zu der Gutniederhaltevorrichtung begeben und die Riegelvorrichtung 44 entriegeln, so dass die Gutleitvorrichtung 30 mit den Laschen 42 nach oben wegschwenken kann bis die Führungen 40 am Ende der Schlitze 38 anschlagen. Nunmehr kann das gestaute Gut herausgezogen und anschließend der Betrieb wieder aufgenommen werden - sh. Figur 3.

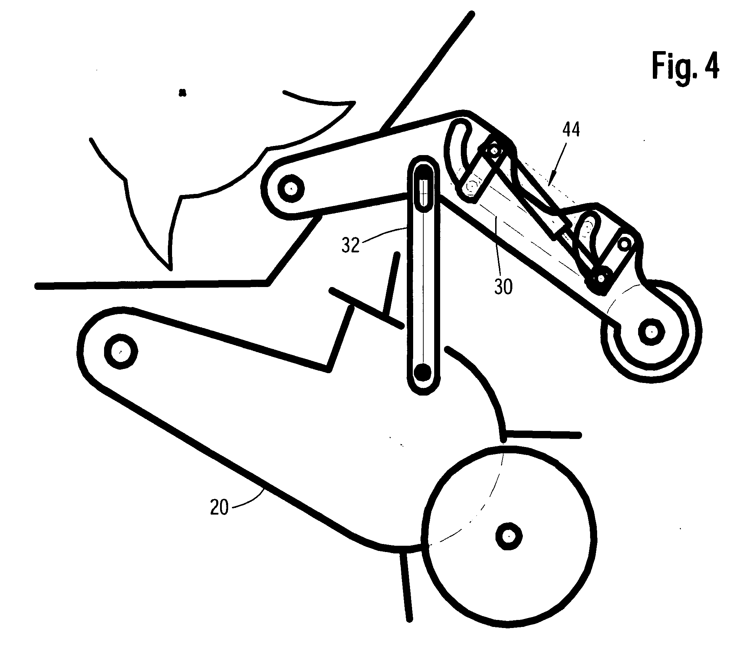

Bei dem Ausführungsbeispiel nach der Figur 4 wird die Riegelvorrichtung 44 von einem Motor gebildet, der in diesem Fall hydraulisch verstellbar ist. Alternativ könnte auch ein Elektro- oder Pneumatikmotor verwendet werden. Die als Motor ausgebildete Riegelvorrichtung kann wiederum im Falle eines Staus so betätigt werden, dass die Gutleitvorrichtung 30 von dem Gutaufnehmer 20 wegschwenkt und den dazwischen befindlichen Raum vergrößert. Schließlich kann die Gutleitvorrichtung 40 wieder motorisch zurück verstellt werden, und zwar jeweils, ohne dass eine Bedienungsperson von dem Zugfahrzeug 12 absteigen müsste. In vergleichbarer Weise könnte auch die Riegelvorrichtung 44 nach den Figuren 1 bis 3 ferngesteuert werden.

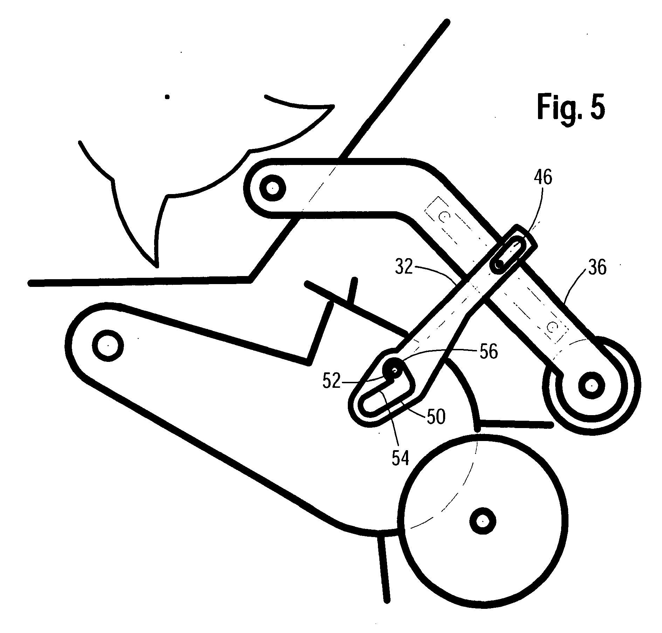

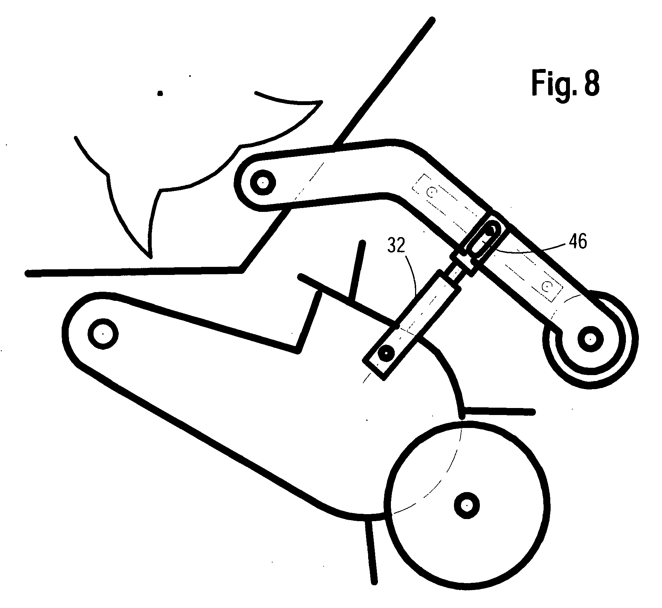

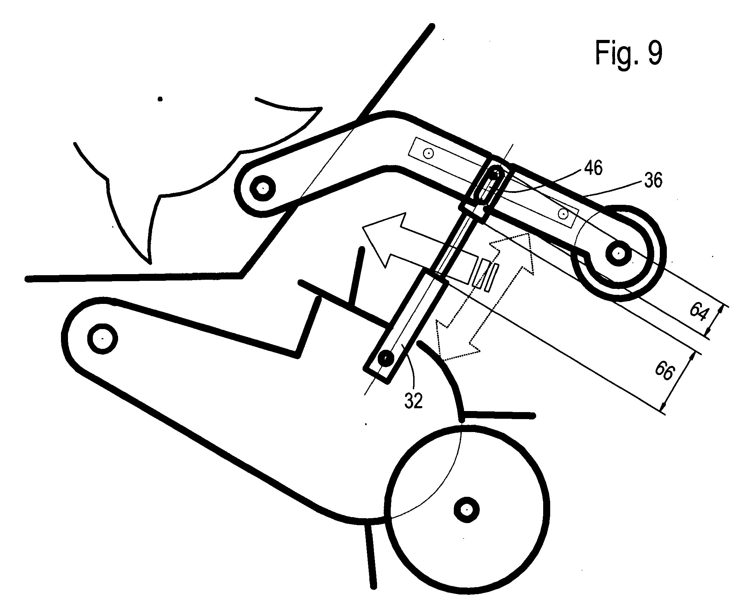

Bei den Ausführungsbeispielen nach den Figuren 5 bis 10 ist die Gutleitvorrichtung 30 nicht mehr beweglich mit dem Träger 28 verbunden, sondern fest; er könnte angeschraubt, angeschweißt etc. sein. Die Schlitze 38, die Führungen 40 und die Laschen 42 entfallen mithin.

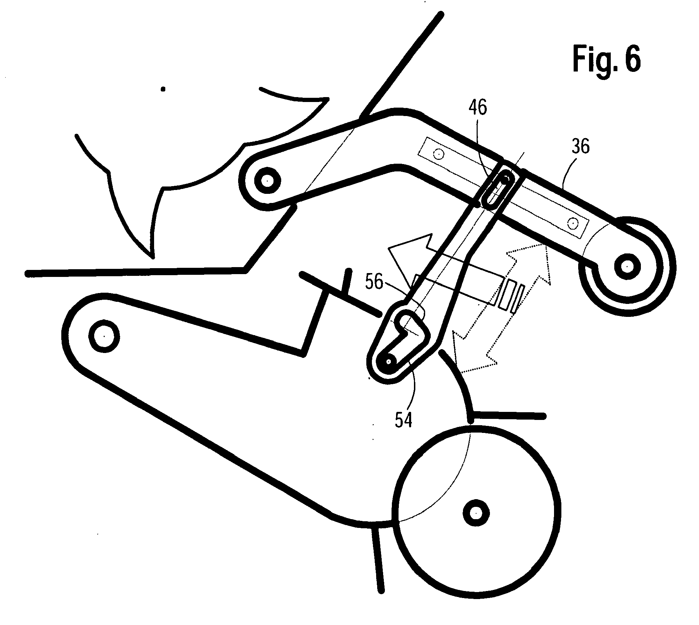

Bei dem Ausführungsbeispiel nach den Figuren 5 und 6 ist der Wegbegrenzer 32 nicht nur mit einem den ersten Bereich 64 bildenden Längsschlitz 46 an dem der Gutleitvorrichtung 30 zugelegenen Endbereich, sondern auch mit einer als Schlitz ausgebildeten Hakenführung 50 an dem gegenüber liegenden Endbereich versehen, die von einem an dem Gutaufnehmer 20 befestigten Halter 52 durchdrungen wird. Die Hakenführung 50 weist einen ersten Führungsabschnitt 54 auf, dessen Längsachse zu der des Längsschlitzes 46 geringfügig geneigt verläuft und der etwa gleich lang ist. An den oberen Endbereich des ersten Führungsabschnitts 54 schließt sich ebenfalls in der Form eines Schlitzes rechtwinklig ein zweiter Führungsabschnitt 56 an, der kürzer ausgebildet sein kann. Der Wegbegrenzer 32 ist so angeordnet, dass sich sein oberer Endbereich in waagrechter Richtung vor dem unteren Endbereich befindet, was bedeutet, dass der untere Endbereich stets die Tendenz hat, in eine vertikale Ausrichtung zu pendeln. Der zweite Führungsabschnitt 56 erstreckt sich in der Richtung der möglichen Pendelbewegung und zwar auf der oberen Seite und nimmt in einer Normalstellung den Halter 52 auf. Mithin kann sich die Gutleitvorrichtung 30 im Normalbetrieb nicht von dem Gutaufnehmer 20 weiter weg bewegen, als der obere Längsschlitz 46 es zulässt. Sobald eine Stausituation eingetreten ist, wird der Wegbegrenzer 32 mit seinem unteren Endbereich manuell oder fremdkraftbetätigt nach hinten geschwenkt, so dass der Halter 52 aus dem zweiten Führungsabschnitt 56 in den ersten Führungsabschnitt 56 gelangt und die gesamte Gutniederhaltevorrichtung 24 nun von dem Gutaufnehmer 20 um die Länge des ersten Führungsabschnitts 54 weggeschwenkt werden kann - sh. Figur 6. Der erste Führungsabschnitt 54 definiert in diesem Ausführungsbeispiel den zweiten Bereich 66.

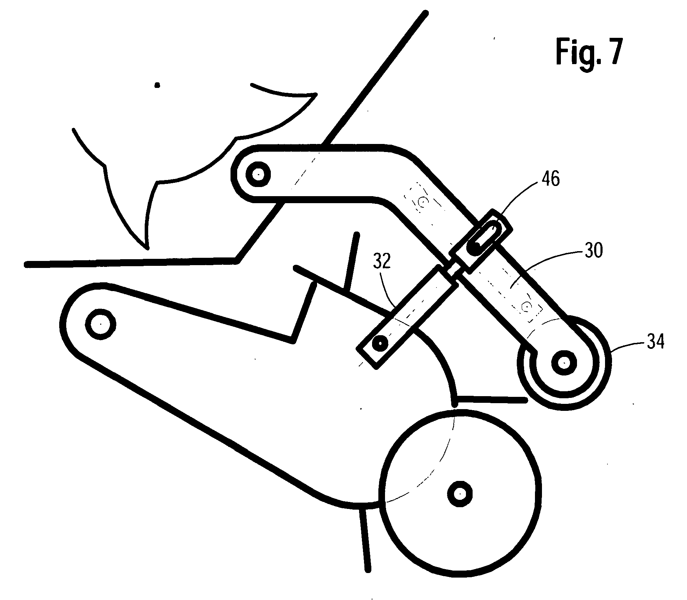

Bei dem Ausführungsbeispiel nach den Figuren 7 bis 9 ist der Wegbegrenzer 32 als ein Motor ausgebildet, der in seinem oberen Endbereich den Längsschlitz 46 aufweist und in seinem unteren Endbereich als Kolben-Zylinder oder Spindeleinheit in seiner Länge verstellbar ist. Auch in diesem Fall kann die Gutleitvorrichtung 30 in dem Bereich der Länge des Längsschlitzes 46 schwenken, um sich wechselnden Dicken des aufgenommenen Gutstroms anzupassen; tritt jedoch ein Stau ein, wird der untere Teil des Wegbegrenzers 32 ausgefahren und das eingeklemmte Gut entlastet. Schließlich wird der Wegbegrenzer 32 wieder eingefahren, um seine Normallänge einzunehmen. In diesem Fall entspricht die Länge des Längsschlitzes 46 wiederum dem ersten Bereich 64 und der Hub des als Motor ausgebildeten Wegbegrenzers 32 entspricht dem zweiten Bereich 66.

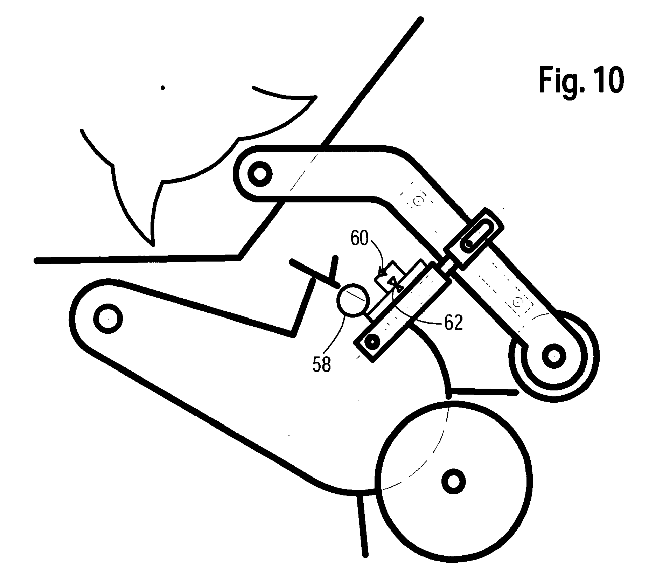

Das letzte Ausführungsbeispiel nach Figur 10 unterscheidet sich von dem nach den Figuren 7 bis 9 lediglich dadurch, dass der Wegbegrenzer 32 nicht nur ferngesteuert verstellbar ist, sondern auch in einem Überlastfall gegen die Kraft eines Federspeichers 58 ausweichen kann. Ein Hydraulikkreis ist so ausgebildet, dass der Wegbegrenzer 32 beim Einfahren, d.h. in Richtung des Gutaufnehmers 20 keinen Widerstand erfährt, während er in der Richtung der Gutleitvorrichtung 30 von dem Gutaufnehmer 20 weg den Ölstrom über ein Rückschlagventil 60 über eine Drossel 62 zu dem Federspeicher 58 führt, der somit einen Bewegungswiderstand aufbaut. Das Rückschlagventil 60 kann auch manuell oder ferngesteuert geöffnet werden, damit die Gutniederhaltevorrichtung 24 in den Zustand gebracht werden kann, in dem sich der Gutstau beseitigen lässt.

## Patentansprüche

1. Landwirtschaftliche Presse (10) mit einem Gutaufnehmer (20) und einer über diesem vorgesehenen und diesem gegenüber innerhalb eines ersten Bereichs (64) verstellbaren Gutniederhaltevorrichtung (24) zur Steuerung der zugeführten Gutmenge, die zumindest bereichsweise zur Behebung eines Gutstaus zwischen dem Gutaufnehmer (20) und der Gutniederhaltervorrichtung für eine Bewegung über den ersten Bereich (64) hinaus von dem Gutaufnehmer (20) weg freigebbar ist, **dadurch gekennzeichnet, dass** die Bewegung über den ersten Bereich (64) hinaus dem Hub eines Elektro- oder Hydraulikmotors entspricht, der die Gutniederhaltevorrichtung (24) trägt.

2. Landwirtschaftliche Presse nach Anspruch 1, **dadurch gekennzeichnet, dass** die Gutniederhaltevorrichtung (24) einen Träger (28) aufweist, an dem eine Gutleitvorrichtung (30) und vorzugsweise eine Niederdrückvorrichtung (34) vorgesehen ist.

3. Landwirtschaftliche Presse nach Anspruch 1 oder 2, **dadurch gekennzeichnet, dass** der Träger (28) im ersten Bereich (64) schwimmend gelagert ist und entweder der Träger (28) oder die Gutleitvorrichtung (30) über den ersten Bereich (64) hinaus anhebbar ist.

4. Landwirtschaftliche Presse nach einem oder mehreren der vorherigen Ansprüche, **dadurch gekennzeichnet, dass** die Gutleitvorrichtung (30) insbesondere als ein Blech, ein Rechen oder als eine Mehrzahl von Rollen ausgebildet ist.

5. Landwirtschaftliche Presse nach einem oder mehreren der vorherigen Ansprüche, **dadurch gekennzeichnet, dass** die Niederdrückvorrichtung (34) als eine Rolle ausgebildet ist.

6. Landwirtschaftliche Presse nach einem oder mehreren der vorherigen Ansprüche, **dadurch gekennzeichnet, dass** die Bewegung innerhalb des ersten Bereichs (64) durch die Länge eines Langlochs (46), einer Kette, eines Seils, eines Lenkers oder dergleichen begrenzt wird.

## Claims

1. Agricultural press (10) comprising a material receiver (20) and a material hold-down device (24), provided above the said material receiver and adjustable relative thereto within a first region (64), for controlling the supplied material quantity, which can be opened at least in regions for eliminating a material jam between the material receiver (20) and the material hold-down device for a movement beyond the first region (64) away from the material receiver (20), **characterized in that** the movement beyond the first region (64) corresponds to the stroke of an electric or hydraulic motor which carries the material hold-down device (24).

2. Agricultural press according to Claim 1, **characterized in that** the material hold-down device (24) has a support (28), on which there is provided a material-guiding device (30) and, preferably, a press-down device (34).

3. Agricultural press according to Claim 1 or 2, **characterized in that** the support (28), in the first region (64), is floatingly mounted, and either the support (28) or the material-guiding device (30) can be raised beyond the first region (64).

4. Agricultural press according to one or more of the previous claims, **characterized in that** the material-guiding device (30) is configured, in particular, as a metal plate, a rake or as a plurality of rollers.

5. Agricultural press according to one or more of the previous claims, **characterized in that** the press-down device (34) is configured as a roller.

6. Agricultural press according to one or more of the previous claims, **characterized in that** the movement within the first region (64) is limited by the length of a long hole (46), a chain, a cable, a link or the like.

## Revendications

1. Presse agricole (10) comprenant un ramasseur (20) et un dispositif de maintien vers le bas des produits (24), prévu au-dessus de celui-ci et déplaçable par rapport à celui-ci à l'intérieur d'une première zone (64), pour commander la quantité de produit acheminée, qui peut être écarté du ramasseur (20) au moins en partie pour éviter une accumulation des produits entre le ramasseur (20) et le dispositif de maintien vers le bas des produits, pour un déplacement au-delà de la première zone (64), **caractérisée en ce que** le déplacement au-delà de la première zone (64) correspond à la course d'un moteur électrique ou hydraulique qui porte le dispositif de maintien vers le bas des produits (24).

2. Presse agricole selon la revendication 1, **caractérisée en ce que** le dispositif de maintien vers le bas des produits (24) présente un support (28) sur lequel est prévu un dispositif de guidage des produits (30) et de préférence un dispositif de pression vers le bas (34).

3. Presse agricole selon la revendication 1 ou 2, **caractérisée en ce que** le support (28) est monté flottant dans la première zone (64), et soit le support (28) soit le dispositif de guidage des produits (30) peut être soulevé au-delà de la première zone (64).

4. Presse agricole selon l'une quelconque ou plusieurs des revendications précédentes, **caractérisée en ce que** le dispositif de guidage des produits (30) est réalisé notamment sous forme de tôle, de râteau ou sous forme d'une pluralité de rouleaux.

5. Presse agricole selon l'une quelconque ou plusieurs des revendications précédentes, **caractérisée en ce que** le dispositif de pression vers le bas (34) est réalisé sous forme de rouleau.

6. Presse agricole selon l'une quelconque ou plusieurs des revendications précédentes, **caractérisée en ce que** le déplacement à l'intérieur de la première zone (64) est limité par la longueur d'un trou oblong (46), d'une chaîne, d'un câble, d'un bras oscillant ou similaire.
